(19) Europäisches Patentamt
European Patent Office
Office européen des brevets

(11) Veröffentlichungsnummer: **0 176 902 B1**

(12) # EUROPÄISCHE PATENTSCHRIFT

(45) Veröffentlichungstag der Patentschrift: **10.04.91**

(51) Int. Cl.⁵: **C09B 67/22**, C08K 5/34, //C09B67/48,C09B5/62

(21) Anmeldenummer: **85111995.8**

(22) Anmeldetag: **21.09.85**

(54) **Mischkristallpigmente auf der Basis von Perylentetracarbonsäurediimiden, Verfahren zu ihrer Herstellung und ihre Verwendung.**

(30) Priorität: **03.10.84 DE 3436208**

(43) Veröffentlichungstag der Anmeldung: **09.04.86 Patentblatt 86/15**

(45) Bekanntmachung des Hinweises auf die Patenterteilung: **10.04.91 Patentblatt 91/15**

(84) Benannte Vertragsstaaten: **CH DE FR GB IT LI**

(56) Entgegenhaltungen:
**EP-A- 0 023 191**
**DE-A- 2 009 073**
**DE-B- 1 113 773**
**US-A- 3 554 776**
**DE-A- 1 067 157**
**DE-B- 1 094 897**
**FR-A- 2 327 288**

**CHEMICAL ABSTRACTS, Band 84, Nr. 24, 14. Juni 1976, Seiten 82-83, Zusammenfassung Nr. 166251s, Columbus, Ohio, US; & JP-A-76 07 025 (MITSUBISHI CHEMICAL INDUSTRIES CO., LTD) 21-01-1976**

(73) Patentinhaber: **HOECHST AKTIENGESELLSCHAFT**
**Postfach 80 03 20**
**W-6230 Frankfurt am Main 80(DE)**

(72) Erfinder: **Spietschka, Ernst, Dr.**
**Kirchweg 3**
**W-6270 Idstein Taunus(DE)**
Erfinder: **Tröster, Helmut, Dr.**
**Am Erdbeerstein 44**
**W-6240 Königstein Taunus(DE)**

**EP 0 176 902 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Mischkristallpigmente auf der Basis von Perylentetracarbonsäurediimiden im Kristallgitter der α-Modifikation des Perylentetracarbonsäure-bis-3',5'-dimethylphenylimids, Verfahren zu ihrer Herstellung und ihre Verwendung zum Färben von organischen Polymeren.

Für den Einsatz in hochschmelzenden Kunststoffen sollen Pigmente nicht nur hohe Licht- und Wetterechtheiten aufweisen, sondern auch den bei der Verarbeitung auftretenden Temperaturen ohne Veränderung des Farbeindrucks widerstehen, d.h. auch eine ausreichende thermische Stabilität besitzen. Für dieses Einsatzgebiet besteht als Alternative zu den bislang überwiegend verwendeten Cadmium-Pigmenten in zunehmendem Maße Interesse für organische Farbmittel.

Die Palette an verfügbaren organischen Pigmenten für hochschmelzende synthetische Polymere, insbesondere Polyolefine, ist wegen der hohen Anforderung an die thermische Beständigkeit lückenhaft.

Zur Erzielung klarer Rottöne hat sich seit langem das Perylenpigment der Formel (1)

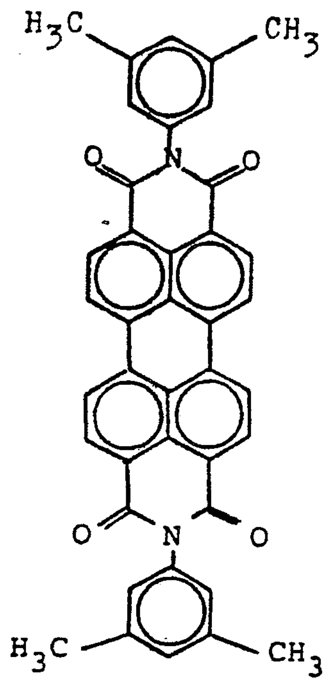

(1)

für das inredestehende Einsatzgebiet als besonders geeignet erwiesen. Diese nach der DE-PS 1 067 157 (US-PS 2 905 685) erhältliche Verbindung, die hierbei in einer in der Japanischen Patentanmeldung J 51007-025 und in der EP-PS 023 191 (US-PS 4 404 385) als α-Modifikation bezeichneten Kristallphase anfällt, ergibt, nach Überführung in eine feinteilige Pigmentform, beispielsweise durch übliche Vermahlung in einer Schwing- oder Rollmühle, eine reine Rotfärbung von hoher Farbstärke und guter thermischer Beständigkeit.

Der vermehrte Einsatz von hochschmelzenden Polymeren wie Polypropylen sowie der Trend zu höheren Produktionsgeschwindigkeiten bei Kunststoffartikeln führten in den letzen Jahren zu einer Verschärfung der Hitzebelastung und damit auch zur Forderung nach einer weiteren Steigerung der Hitzebeständigkeit dieses Pigmentes.

Außerdem wird von vielen Kunststoffverarbeitern seit längerem der Wunsch nach einem deutlich gelberen, farbstarken Rot mit entsprechendem Echtheitsniveau geäußert.

Mit dem seit langem bekannten Perylentetracarbonsäure-bis-4'-ethoxyphenylimid der Formel (4)

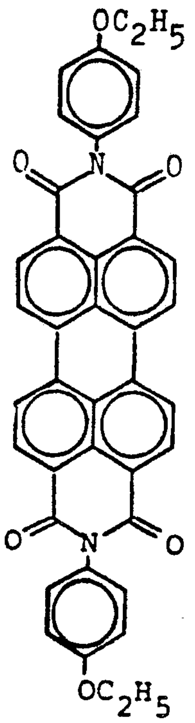

(4)

ist zwar ein solches klares, gelbstichiges Rot verfügbar. Die ungenügende thermische Stabilität dieses Pigments schließt jedoch einen Einsatz in hochschmelzenden Polymeren, in denen es bei den hohen Verarbeitungstemperaturen einen Farbtonumschlag nach blaustichig rot erleidet, aus.

Gegenstand der Erfindung sind neue Perylentetracarbonsäurediimid-Mischkristallpigmente im Kristallgitter der α-Modifikation des Perylentetracarbonsäure-bis-3',5'-dimethylphenylimids der Formel (1), bestehend aus 99 - 70 Molprozent des symmetrischen Diimids der Formel (1) und entsprechend 1- 30 Molprozent des asymmetrisch substituierten Diimids der Formel (2)

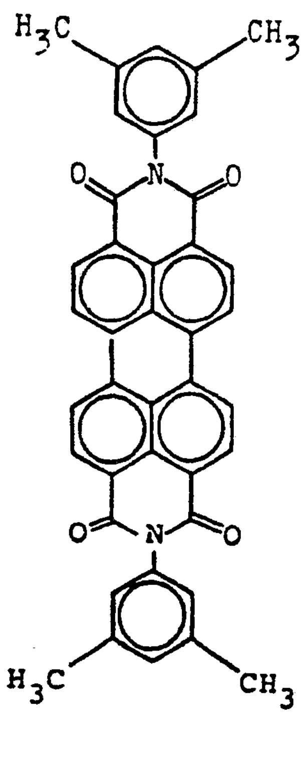

(1)

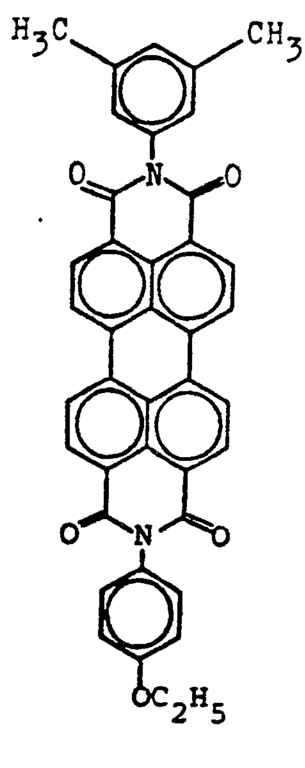

(2)

Verfahren zu ihrer Herstellung, indem man ein Gemisch aus 99-70 Molprozent Perylentetracarbonsäuredianhydrid und entsprechend 1 -30 Molprozent des Perylentetracarbonsäuremonoanhydrid-mono-phenetidids der Formel (3)

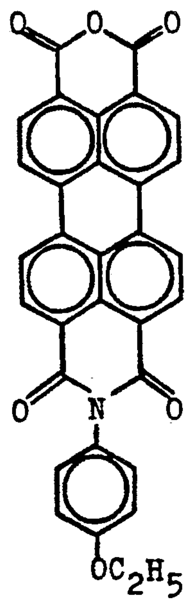

(3)

mit der mindestens stöchiometrischen Menge von 3-5-Dimethylanilin in an sich bekannter Weise kondensiert, sowie deren Verwendung zum Färben von organischen Polymeren.

Die so erhältlichen Perylentetracarbonsäurediimid-Mischkristallpigmente ergeben nach Überführung in eine feinteilige Pigmentform nach üblichen Finish-Methoden beispielsweise durch Vermahlen, in hochschmelzenden Polymeren, insbesondere in Polyethylen und Polypropylen, Ausfärbungen, die gegenüber dem reinen Pigment der genannten Formel (1) sowohl eine deutlich verbesserte thermische Stabilität als auch den erwünschten gelberen Farbton aufweisen. Die Stärke der Gelbverschiebung läßt sich durch Variation des Anteils der Komponente der Formel (2) im Mischkristall steuern.

Die neuen Perylentetracarbonsäurediimid-Mischkristallpigmente, die aus den Verbindungen der genannten Formeln (1) und (2) im vorstehend genannten Molverhältnis bestehen, bilden Mischkristalle, die im gleichen Kristallgitter wie die a-Modifikation der Verbindung der genannten Formel (1) kristallisieren.

Im Anhang sind zum Vergleich die Röntgenbeugungsdiagramme des Kristallgitters zweier typischer erfindungsgemäß erhältlicher Mischkristalle (FIGUR 2 und 3) und der α-Modifikation der Verbindung der genannten Formel (1) (FIGUR 1) wiedergegeben. Wie ersichtlich, handelt es sich um übereinstimmende Diagramme, woraus folgt, daß auch die Kristallgitter übereinstimmend sind.

Für die erfindungsgemäße Mischkondensation wird das Monoanhydrid der Formel (3) vorzugsweise in einer Menge von 5-15 Molprozent eingesetzt. Da die Reaktion praktisch quantitativ verläuft, liegt somit der bevorzugte Anteil an dem asymmetrisch substituierten Diimid der Formel (2) in der Mischphase der beiden Komponenten der Formeln (1) und (2) ebenfalls zwischen 5 und 15 Molprozent.

Die Ausgangsverbindung der Formel (3) kann nach den Angaben der Deutschen Patentanmeldung P 33 09 060.2 (Europäische Patentanmeldung 84 102 555.4, EP-A-0122442) erhalten werden. Die Mischkondensationsreaktion kann in bekannter Weise, beispielsweise gemäß den Angaben der DE-PS 1 105 085 (GB-PS 897 707), DE-AS 1 094 897 oder DE-OS 1 807 729 durchgeführt werden, indem man das Gemisch der Reaktanden bei erhöhter Temperatur von etwa 150 - 220° C, gegebenenfalls in Gegenwart eines Kondensationsbeschleunigers, wie Zinkchlorid, Zinkcarboxylat, oder einer Mineralsäure, in einem hochsiedenden Lösungsmittel, wie beispielsweise Di- oder Trichlorbenzol, Nitrobenzol, N-Methylpyrrolidon, Chinolin, Phenolen oder auch im Überschuß von 3,5-Dimethylanilin, umsetzt. Die Reaktionsprodukte können in üblicher Weise durch Filtration, gegebenenfalls nach vorherigem Verdünnen mit einem niedrigsiedenden Alkohol, wie Methanol, abgetrennt werden.

Zur Überführung in eine feinteilige, transparent färbende Pigmentform kann das erhaltene trockene Rohpigment nach üblichen Mahlverfahren, beispielsweise in einer Schwing- oder Rollmühle, in Gegenwart von Mahlhilfsmitteln gemahlen werden. Als Mahlkörper dienen hierbei im allgemeinen Stahl- oder Korundkugeln oder Stahl- oder Korundcylpebs, Mahlhilfsmittel können wasserlösliche Salze, wie Natriumsulfat, Aluminiumsulfat oder Natriumchlorid, sein, die nach beendeter Mahlung in bekannter Weise durch wäßrigen

Salzauszug vom Pigment abgetrennt werden.

Mischkristallpigmente der Perylentetracarbonsäurediimidreihe sind bereits bekannt. In der US-PS 3 554776 werden Pigmente, bestehend aus einer festen Lösung von mindestens zwei Perylentetracarbonsäurediimiden beansprucht. Bei den diesen Pigmenten zugrundeliegenden Verbindungen handelt es sich um symmetrische N,N'-substituierte Perylentetracarbonsäurediimide. Demgegenüber unterscheiden sich die erfindungsgemäßen Mischkristalle, bei denen die eine Komponente der genannten Formel (2) ein definiertes asymmetrisch substituiertes Diimid darstellt, durch ihre andersartige chemische Zusammensetzung. Entsprechendes gilt auch für die aus der DE-OS 2 009 073 (Canadische Patentschrift 912 757) bekanntgewordenen festen Lösungen von Perylentetracabonsäurediimid-Pigmenten. Auch bei diesen Pigmenten handelt es sich um Mischungen, die aus symmetrisch N,N'-substituierten Perylentetracarbonsäurediimiden zusammengesetzt sind.

Die neuen erfindungsgemäß erhältlichen Mischkristallpigmente eignen sich zum Einfärben von Lacken, Kunststoffen, wie Polyvinylchlorid, Polystrol, Polyamid, und besondes vorteilhaft zum Pigmentieren von hoch schmelzenden Polymeren, wie Polyethylen und Polypropylen, sowie für die Spinnfärbung von Polypropylen. Sie weisen gegenüber dem beispielsweise gemäß der DE-PS 1 067 157 (US-PS 2 905 685) erhältlichen Perylenpigment der genannten Formel (1) bei gleicher Kristallmodifikation - nach entsprechender Überführung in eine feinteilige, transparente Pigmentform - in hochschmelzenden organischen Polymeren, insbesondere in Polyolefinen, bei mindestens ebenbürtiger Farbstärke und gelberem Farbton eine deutlich höhere Hitzestabilität auf.

Den aus der DE-AS 2 832 761 (US-PS 4 262 851) und der EP-PS 042 819 (US-PS 4 404 386) bekannten, deckend färbenden Pigmentformen des Bisxylidids der genannten Formel (1) sind sie bei wesentlich gelberem, reinerem Farbton in der Farbstärke überlegen.

In den nachfolgenden Beispielen beziehen sich die Prozentangaben, sofern nicht anders vermerkt, auf das Gewicht. Die Röntbeugungsdiagramme wurden mit einem rechnergesteuerten Pulverdiffraktometer D 500 der Firma SIEMENS mit Kupfer-K$\alpha$-Strahlung aufgenommen.

Beispiel 1

Ein Gemisch aus 52,9 g Perylentetracarbonsäuredianhydrid und 7.7 g Perylentetracarbonsäuremonoanhydridmono-4'-ethoxyphenylimid wird in einer Mischung aus 190 g 3,5-Dimethylanilin und 440 g Chinolin nach Zusatz von 3,0 g wasserfreiem Zinkchlorid 8 Stunden unter kontinuierlichem Abdestillieren des entstandenen Wassers bei 180-185 °C gerührt. Man saugt bei 100 °C ab, wäscht das Reaktionsprodukt mit Methanol, verdünnter Salzsäure und anschließend mit Wasser säurefrei und trocknet. Das in einer Ausbeute von 88,9 g (98,8 % der Theorie) erhaltene, einheitlich in roten Nadeln auskristallisierte Mischkondensationsprodukt besteht aus ca. 90 Molprozent der Komponente der Formel (1) und ca. 10 Molprozent der Komponente der Formel (2). Es entspricht gemäß Röntgenbeugungsdiagramm (vgl. FIGUR 2 im Anhang) der $\alpha$-Modifikation der Komponente der Formel (1) (vgl. FIGUR 1 im Anhang).

Zur Überführung in eine feinteilige Pigmentform werden 30 g Mischkondensationsprodukt mit 150 g Natriumsulfat wasserfrei in einem 1 l Kunststoffmahlbehälter mit 1400 g Korundkugeln (Durchmesser 12 mm) auf einem Vibratom-Schwingtisch 6 Stunden vermahlen und das Mahlgut nach einem wäßrigen Salzauszug getrocknet und in einer IK-Schlagkreuzmühle (der Firma JANKE und KUNKEL) aufgemahlen. (In gleicher Weise werden auch die nach den folgenden Beispielen erhaltenen Produkte zerkleinert.)

Beispiel 2

Setzt man eine Mischung aus 41,2 g Perylenetracarbonsäuredianhydrid und 23,0 g Perylentetracarbonsäuremonoanhydridmono-4'-ethoxyphenylimid anstelle einer Mischung aus 52,9 g bzw. 7,7 g der genannten Verbindungen ein und verfährt im übrigen wie in Beispiel 1 beschrieben, so erhält man in einer Ausbeute von 89,9 g (99,4 % der Theorie) das entsprechende einheitliche kristalline gelbstichig rote Mischkondensationsprodukt in Form von Mischkristallen der $\alpha$-Modifikation der reinen Verbindung der Formel (1) (vgl. FIGUR 3 im Anhang). Es besteht aus ca. 70 Molprozent der Komponente der Formel (1) und ca. 30 Molprozent der Komponente der Formel (2).

Beispiel 3

Eine Suspension von 37,2 g Perylentetracarbonsäuredianhydrid, 2,6 g Perylentetracarbonsäuremonoanhydridmono-4'-ethoxyphenylimid, 2,2 g kristallinem Zinkacetat und 200 g 3,5-Dimethylanilin wird 6 Stunden bei 180 °C gerührt. Das in einer Ausbeute von 59,1 g (99,5 % der Theorie) erhaltene, aus ca. 95 Molprozent der Komponente der Formel (1) und ca. 5 Molprozent der Komponente der Formel (2) zusammengesetzte Mischkondensationsprodukt bildet ebenfalls Mischkristalle in der α-Modifikation der Komponente der Formel (1).

Beispiel 4 (Vergleichsbeispiel)

62,0 g Perylentetracarbonsäuredianhydrid werden in 210 g 3,5-Dimethylanilin in Gegenwart von 3,2 g wasserfreiem Zinkchlorid 8 Stunden bei 185 °C gerührt. Das entstandene Bisxylidid der Formel (1) wird in üblicher Weise isoliert. Die Ausbeute beträgt 92,5 g (97,9 % der Theorie). Die Reflexionswinkel im Röntgenbeugungsdiagramm (vgl. FIGUR 1 im Anhang) stimmen mit den aus der obengenannten japanischen Patentanmeldung bekanntgewordenen Winkeldaten der als α-Modifikation bezeichneten Kristallphase dieser Verbindung überein.

Bestimmung der Hitzebeständigkeit gemäß Prüfung DIN 53772-A

0,75 g des zu prüfungen Pigments und 500 g Polyethylen ((R)Hostalen GC 7260 Pulver) werden in einem Collin-Schnellmischer bei Raumtemperatur 1 Minute bei 2000 Umdrehungen pro Minute gemischt. Nach Zugabe von 7,14 g (R)Remafin-Weiß RCL-AE 30 (≙ 1 % $TiO_2$) wird die Mischung auf einem Extruder (Weber ET 20) in 2 Passagen bei 180 °C extrudiert. Das erhaltene Granulat wird anschließend auf einer Spritzgießmaschine (Aarburg Allrounder 221 E/170 P) bei Prüftemperaturen von 200 - 300 °C in Intervallen von jeweils 20 °C und einer Verweildauer von 5 Minuten zu Platten verspritzt.

Ergebnisse (Standardfarbtiefe 1/3 nach DIN 53235).

| Beispiel | Hitzebeständigkeit (Farbabstand $E^*_{ab} = 3$) | Bunttonwinkel (DIN 6174) |
|---|---|---|
| 1 | > 300 °C | 26,1° |
| 2 | > 300 °C | 26,9° |
| 3 | > 300 °C | 25,1° |
| 4 (Vergleich) | 270 °C | 23,3° |

Die in der vorstehenden Tabelle niedergelegten Ergebnisse zeigen die überlegene Hitzebeständigkeit sowie den deutlich gelberen Farbton der erfindungsgemäßen Mischkristallpigmente gegenüber dem reinen Perylenpigment der Formel (1).

## Ansprüche

1. Perylentetracarbonsäurediimid-Mischkristallpigmente im Kristallgitter der α-Modifikation des Perylentetracarbonsäure-bis-3',5'-dimethylphenylimids der Formel (1), bestehend auf 99 - 70 Molprozent des symmetrischen Diimids der Formel (1) und entsprechend 1 - 30 Molprozent des asymmetrisch substituierten Diimids der Formel (2)

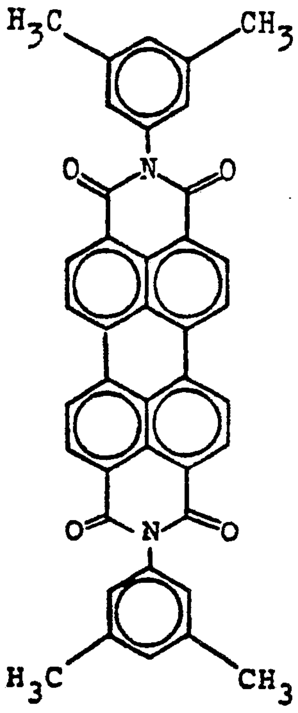

(1)

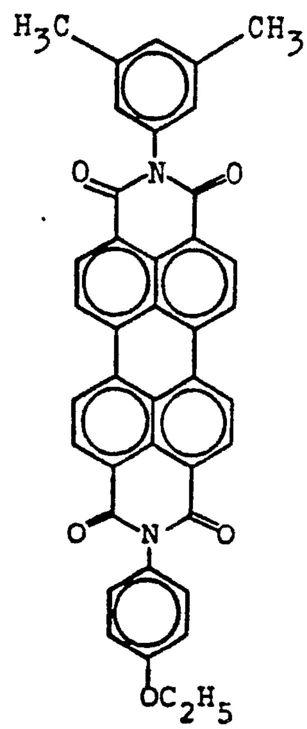

(2)

2. Perylentetracarbonsäurediimid-Mischkristallpigmente nach Anspruch 1, bestehend auf 95 - 85 Molprozent des Diimids der Formel (1) und entsprechend 5 bis 15 Molprozent des Diimids der Formel (2).

3. Verfahren zur Herstellung von Perylentetracarbonsäurediimid-Mischkristallpigmenten im Kristallgitter der $\alpha$-Modifikation des Perylentetracarbonsäure-bis-3',5'-dimethylphenylimids der Formel (1), bestehend aus 99 - 70 Molprozent des symmetrischen Diimids der Formel (1) und entsprechend 1 - 30 Molprozent des asymmetrisch substituierten Diimids der Formel (2)

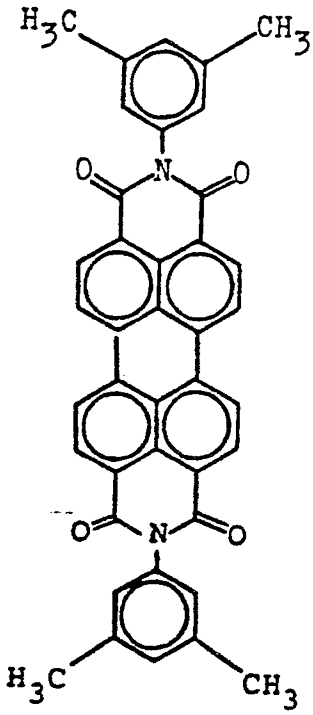

(1)

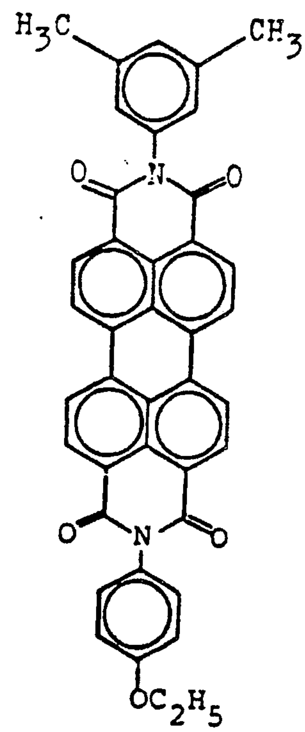

(2)

dadurch gekennzeichnet, daß man ein Gemisch aus 99-70 Molprozent Perylentetracarbonsäuredianhydrid und entsprechend 1-30 Molprozent des Perylentetracarbonsäuremonoanhydrid-mono-phenetidids der Formel (3)

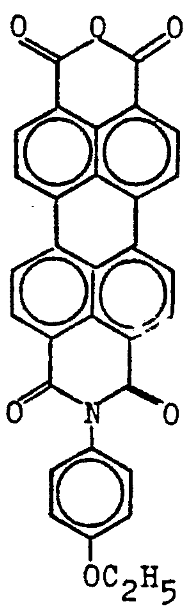

(3)

mit der mindestens stöchiometrischen Menge von 3,5-Dimethylanilin in an sich bekannter Weise kondensiert.

4. Verwendung der in Anspruch 1 genannten Perylentetracarbonsäurediimid-Mischkristallpigmente zum Färben von organischen Polymeren.

## Claims

1. A perylenetetracarbimide mix-crystal pigment in the crystal lattice of the α-modification of N,N'-bis-3',5'-dimethylphenylperylenetetracarbimide of the formula (1) comprising 99-70 mole percent of the symmetrical diimide of the formula (1) and correspondingly 1-30 mole percent of the asymmetrically substituted diimide of the formula (2)

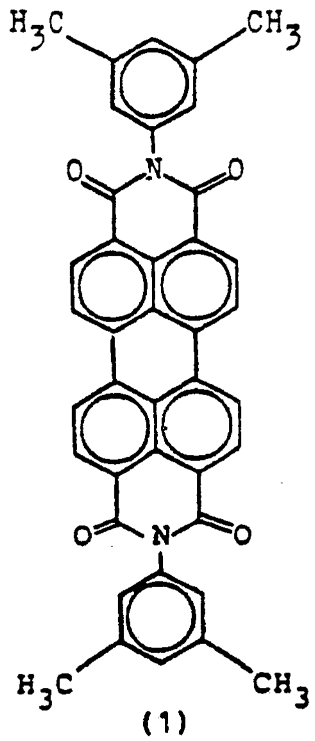

(1)

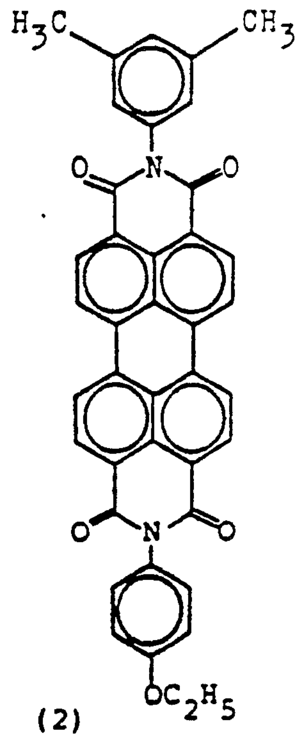

(2)

2. The perylenetetracarbimide mix-crystal pigment as claimed in claim 1 comprising 95-85 mole percent of the diimide of the formula (1) and correspondingly 5 to 15 mole percent of the diimide of the formula (2).

3. A process for preparing perylenetetracarbimide mix-crystal pigments in the crystal lattice of the α-modification of N,N'-bis-3',5'-dimethylphenylperylene tetracarbimide of the formula (1) composed of 99-70 mole percent of the symmetrical diimide of the formula (1) and correspondingly 1-30 mole percent of the asymmetrically substituted diimide of the formula (2)

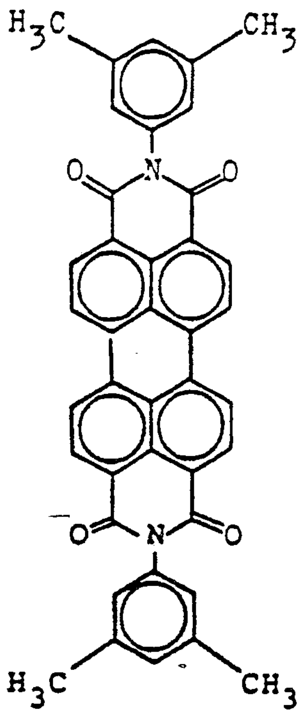

(1)

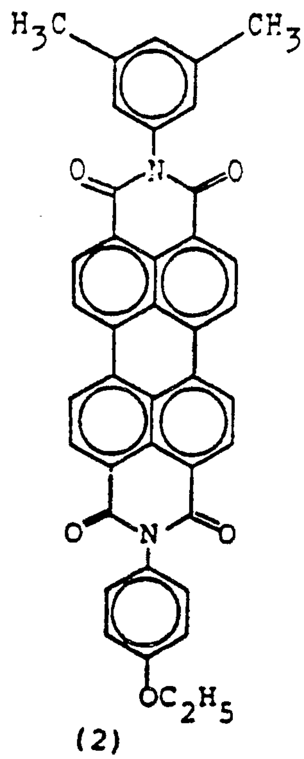

(2)

which comprises condensing a mixture of 99-70 mole percent of perylenetetracarboxylic dianhydride and correspondingly 1-30 mole percent of the perylenetetracarboxylic monoanhydride monophenetidide of the formula (3)

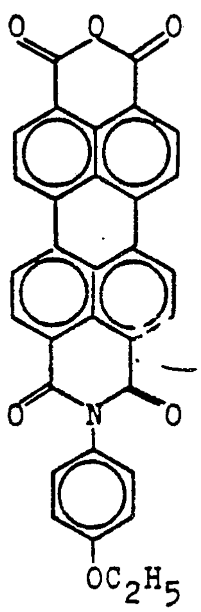

(3)

with an at least stoichiometric amount of 3,5-dimethylaniline in a manner known per se.

4. Use of the perylenetetracarbimide mix-crystal pigment mentioned in claim 1 for coloring organic polymers.

## Revendications

1. Pigments en cristaux mixtes à base de di-imides de l'acide pérylène-tétracarboxylique dans le réseau

cristallin de la modification α du bis-(diméthyl-3,5 phényl)-imide de l'acide pérylène-tétracarboxylique de formule 1, pigments qui sont constitués de 99 à 70 % en moles du di-imide symétrique de formule 1 et, en complément, de 1 à 30 % en moles du di-imide substitué asymétriquement de formule 2 :

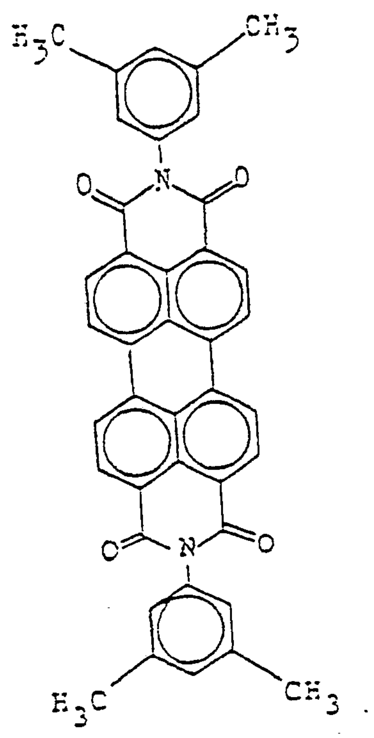

(1)

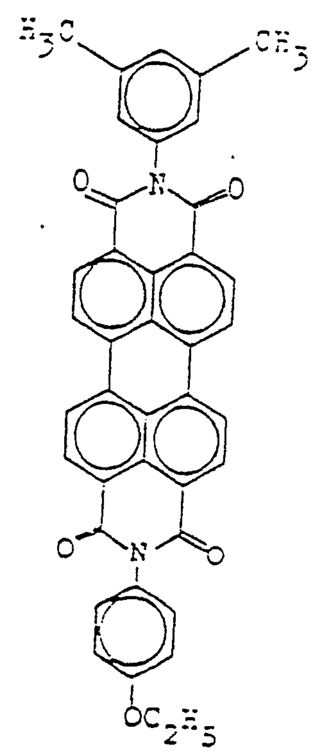

(2).

2. Pigments en cristaux mixtes à base de di-imides de l'acide pérylène-tétracarboxylique selon la revendication 1, pigments qui sont constitués de 95 à 85 % en moles du di-imide de formule 1 et, en complément, de 5 à 15 % en moles du di-imide de formule 2.

3. Procédé pour préparer des pigments en cristaux mixtes à base de di-imides de l'acide pérylène-tétracarboxylique dans le réseau cristallin de la modification α du bis-(diméthyl-3,5 phényl)-imide de l'acide pérylène-tétracarboxylique de formule 1, pigments constitués de 99 à 70 % en moles du di-imide symétrique de formule 1 et, en complément, de 1 à 30 % en moles du di-imide substitué asymétriquement de formule 2 :

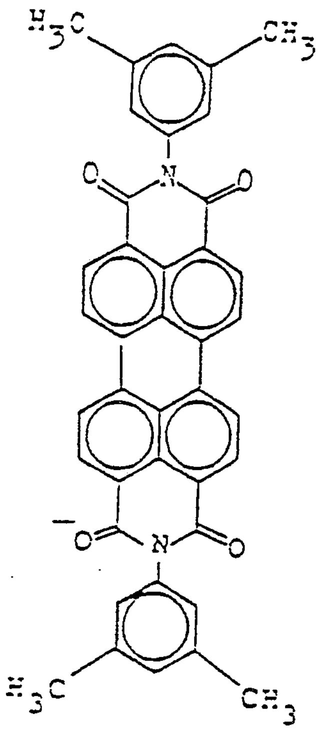

(1)

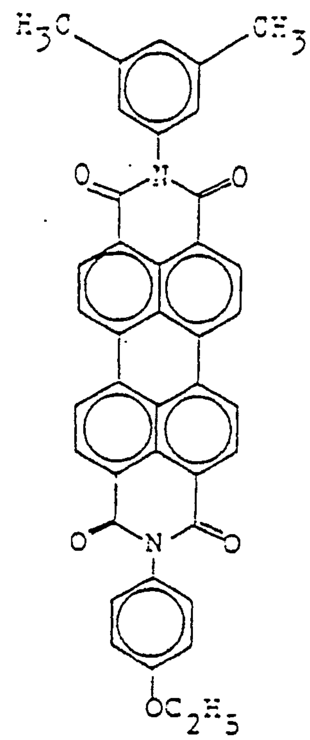

(2),

procédé caractérisé en ce qu'on condense de manière connue un mélange de 99 à 70 % en moles du dianhydride de l'acide pérylène-tétracarboxylique et, en complément, de 1 à 30 % en moles du mono-anhydride mono-phénétidide de l'acide pérylènetétracarboxylique répondant à la formule 3 :

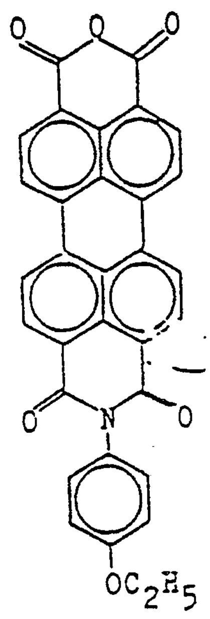

(3)

avec une quantité au moins égale à la quantité stoechiométrique de diméthyl-3,5 aniline.

4. Application des pigments en cristaux mixtes à base de di-mites de l'acide pérylène-tétracarboxylique qui ont été mentionnés à la revendication 1, à la coloration de polymères organiques.

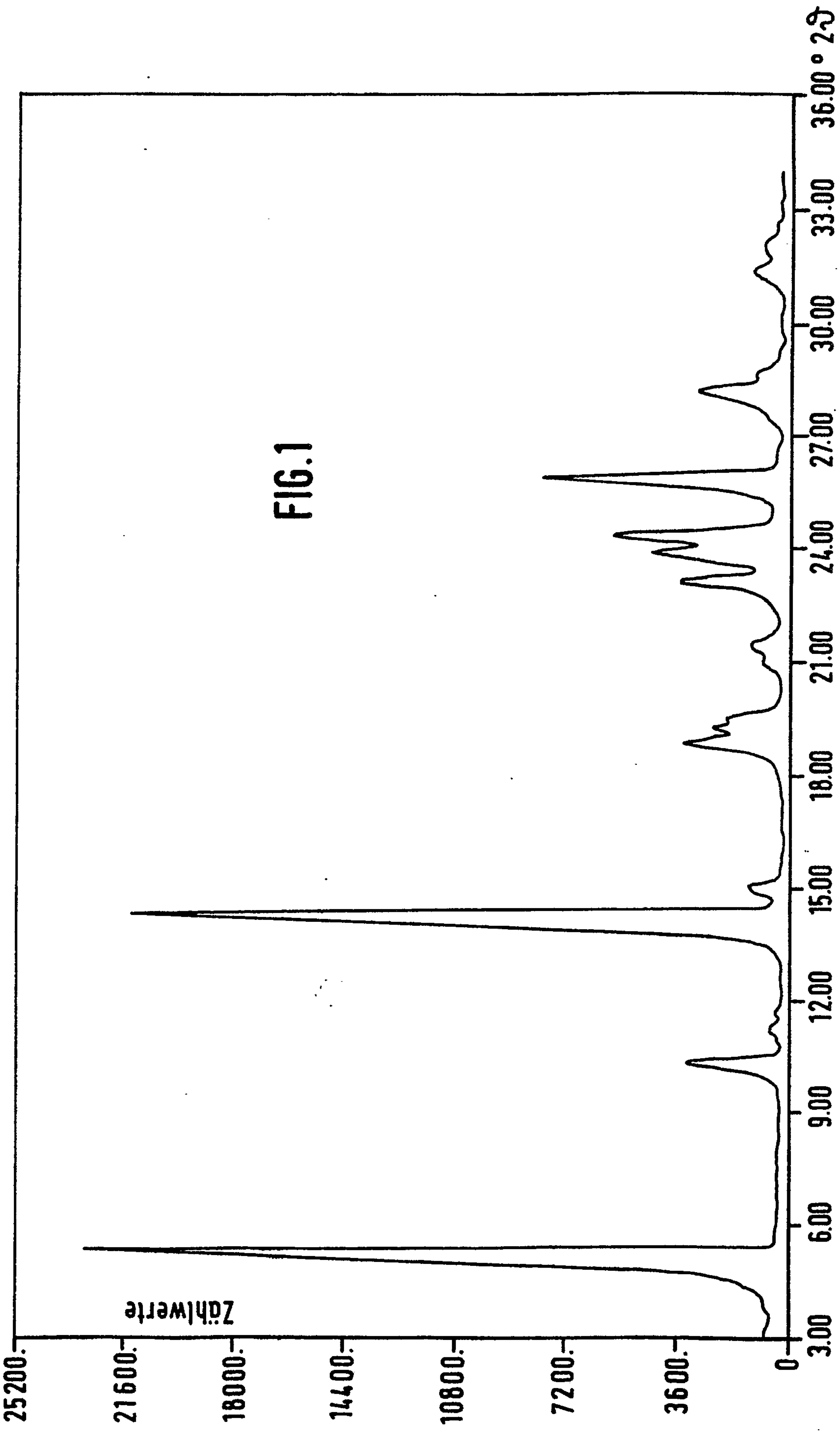
Zählwerte
25200.
21600.
18000.
14400.
10800.
7200.
3600.
0
3.00
6.00
9.00
12.00
15.00
18.00
21.00
24.00
27.00
30.00
33.00
36.00 ° 2ϑ

FIG.1

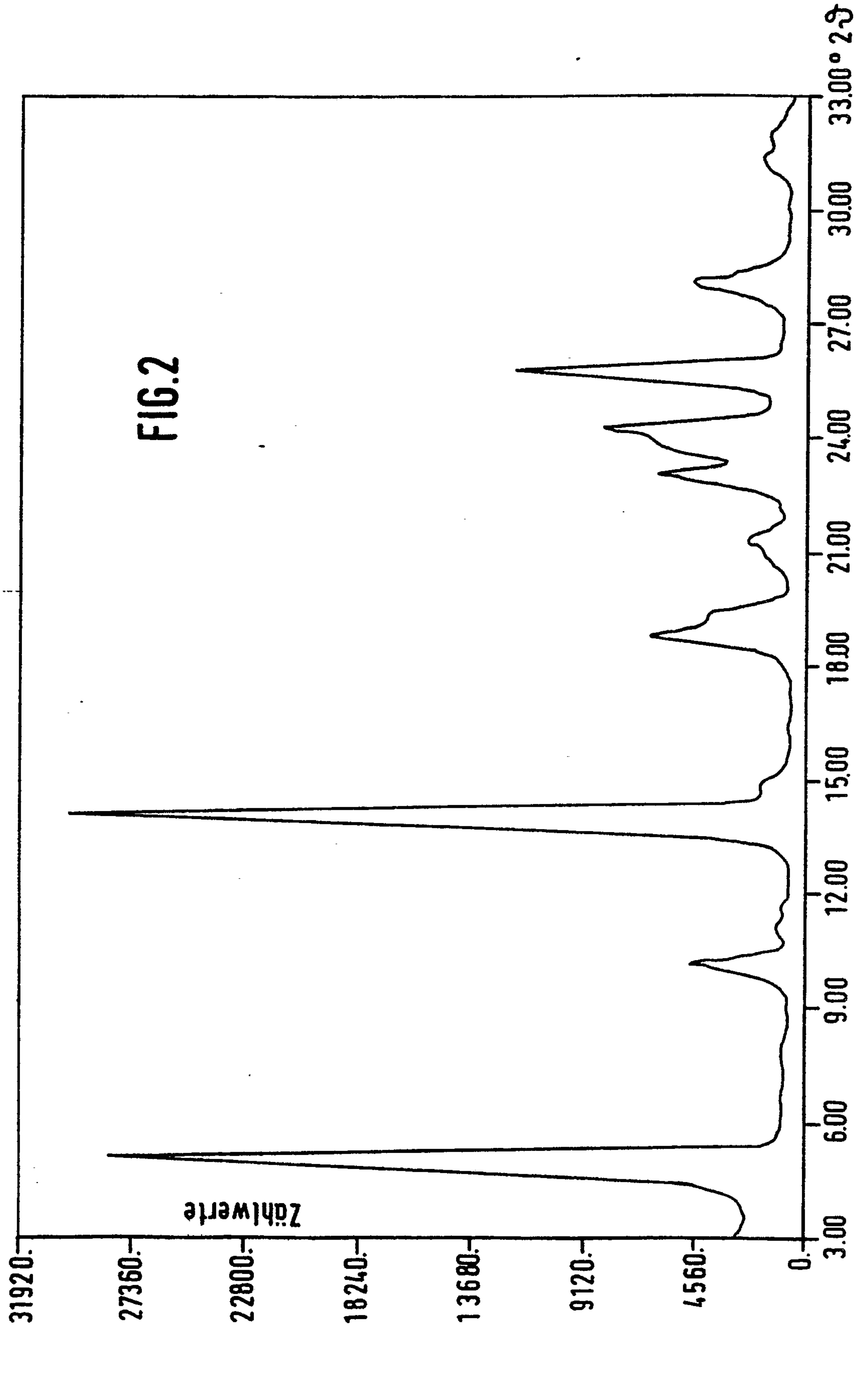
Zählwerte
31920
27360
22800
18240
13680
9120
4560
0
3.00
6.00
9.00
12.00
15.00
18.00
21.00
24.00
27.00
30.00
33.00 ° 2ϑ

FIG.2

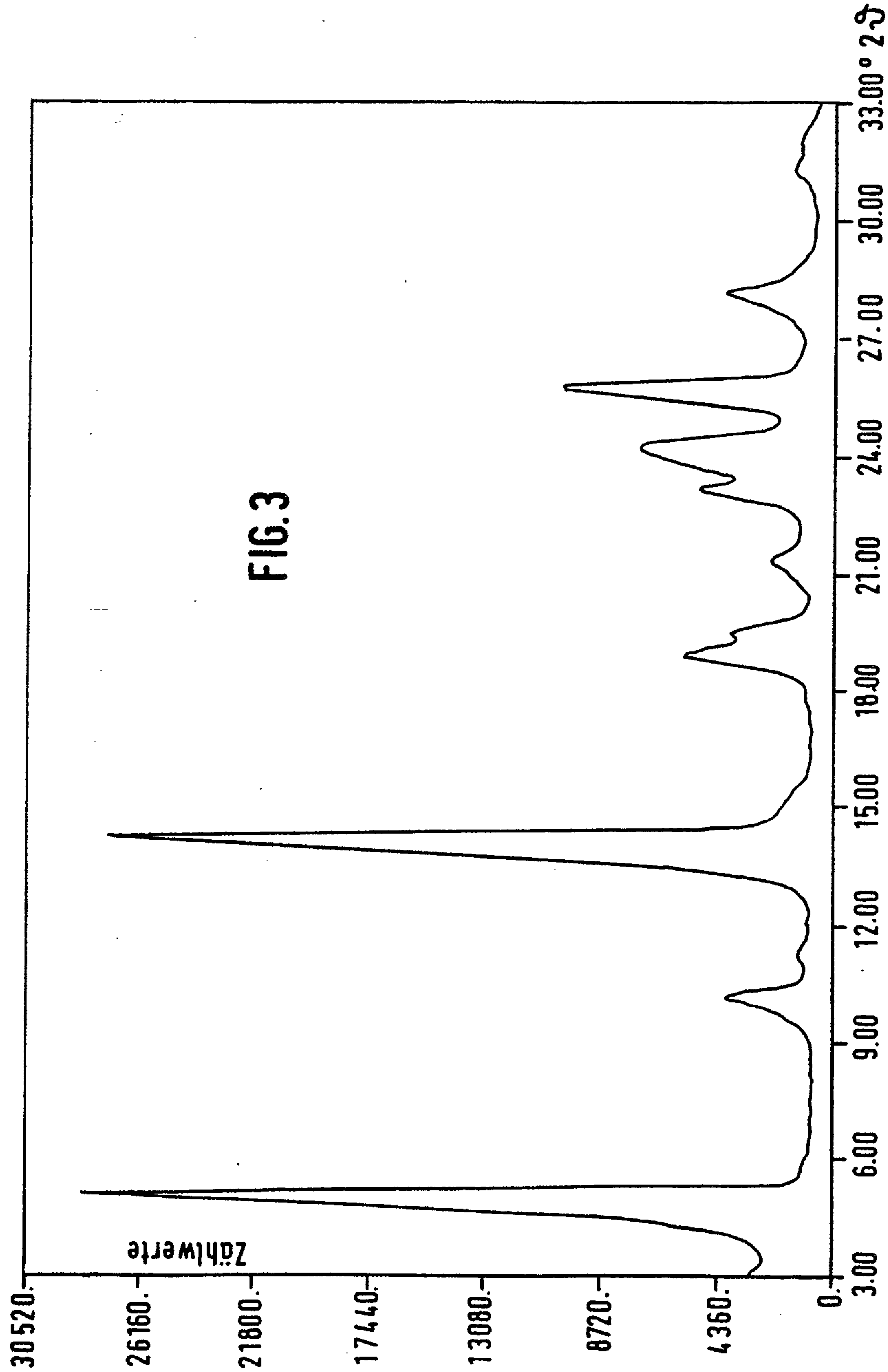
Zählwerte
30520.
26160.
21800.
17440.
13080.
8720.
4360.
0.
3.00
6.00
9.00
12.00
15.00
18.00
21.00
24.00
27.00
30.00
33.00 ° 2ϑ

FIG.3